# EUROPÄISCHE PATENTANMELDUNG

(11) **EP 1 924 065 A1**
(43) Veröffentlichungstag der Anmeldung: **21.05.2008**
(21) Anmeldenummer: 07020360.9
(22) Anmeldetag: 18.10.2007
(51) Int. Cl.: H04M 1/2745

(54) **Verfahren zum automatischen Direktanruf eines elektronischen Sprachspeichers in einem Telekommunikationsnetz und Verfahren zum Erstellen einer Direktwahl-Rufnummer für einen elektronischen Sprachspeicher in einem Telekommunikationsnetz**

(30) Priorität: 17.11.2006 DE 102006054287
(71) Anmelder: Deutsche Telekom AG, 53113 Bonn (DE)
(72) Erfinder: Schrimpf, Werner, 53179 Bonn (DE)

(57) **Zusammenfassung**

Die Erfindung betrifft ein Verfahren zum automatischen Direktanruf eines elektronischen Sprachspeichers in einem Telekommunikationsnetz unter Verwendung eines Nummernspeichers, in dem Zuordnungen von Netz-Kennziffern von Telekommunikationsnetzbetreibern zu Sprachspeicher-Zusatzkennziffern gespeichert sind, mit folgenden Schritten:
- Bereitstellen (10) einer Telefonnummer, die eine Netz-Kennziffer und eine Teilnehmer-Rufnummer enthält;
- Erkennen (12) der Netz-Kennziffer in der bereitgestellten Telefonnummer;
- Ermitteln (14) einer Sprachspeicher-Zusatzkennziffer aus dem Nummernspeicher unter Verwendung der erkannten Netz-Kennziffer;
- Einfügen (16) der ermittelten Sprachspeicher-Zusatzkennziffer zwischen die Netz-Kennziffer und die Teilnehmer-Rufnummer der bereitstellten Telefonnummer, um eine Sprachspeicher-Direktwahl-Rufnummer zu bilden; und
- Herstellen (18) einer Verbindung zum Sprachspeicher unter Verwendung der gebildeten Sprachspeicher-Direktwahl-Rufnummer.

## Beschreibung

Die Erfindung betrifft ein Verfahren zum automatischen Direktanruf eines elektronischen Sprachspeichers in einem Telekommunikationsnetz gemäß Anspruch 1 und ein Verfahren zum Erstellen einer Direktwahl-Rufnummer für einen elektronischen Sprachspeicher in einem Telekommunikationsnetz gemäß Anspruch 8.

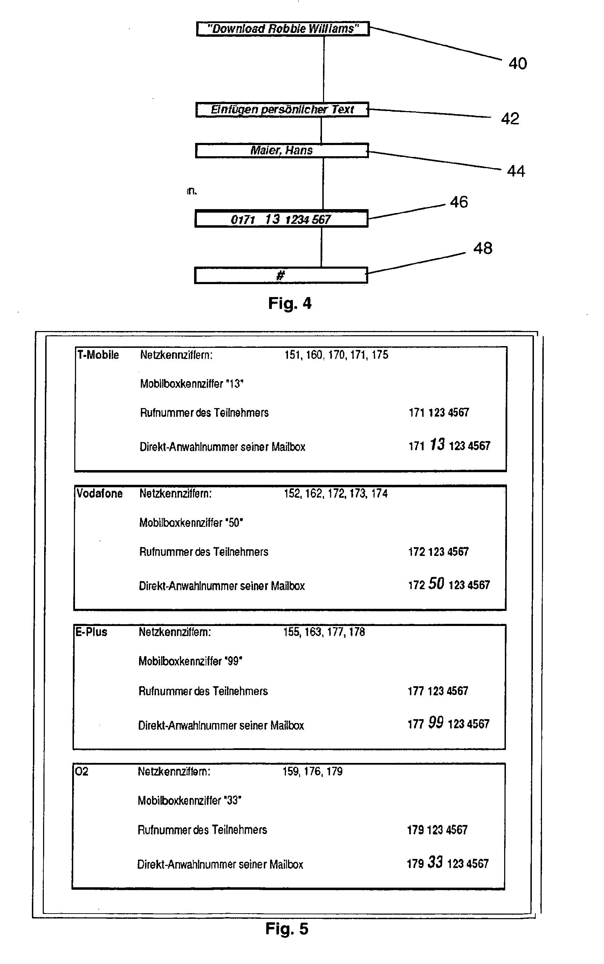

In Mobilfunknetzen wie denen der Unternehmen T-Mobile, Vodafone, E-Plus und 02 können elektronische Sprachspeicher (im Folgenden auch als Sprach-Mailboxen oder Sprachboxen bezeichnet) von Teilnehmern direkt angewählt werden. Hierzu wird einfach zwischen Netzkennziffer und der eigentlichen Rufnummer eine Netzbetreiber-spezifische 2-stellige Ziffer - eine Sprachspeicher-Zusatzkennziffer - eingefügt. Soll beispielsweise für die Rufnummer 0171-1234 567 im Mobilfunknetz von T-Mobile die zugehörige Sprachbox direkt angewählt werden, so wird beim Eingeben der Rufnummer der Sprachbox zwischen der Netzkennziffer "0171" und der eigentlichen Rufnummer, hier "1234 567", als Sprachspeicher-Zusatzkennziffer die 2-stellige Ziffer "13" eingefügt. Jedes Mobilfunknetz hat seine eigene 2-stellige Sprachspeicher-Zusatzkennziffer: Bei Vodafone lautet diese Ziffer "50", bei E-Plus "99", bei 02 "33". Die zusammengesetzte Rufnummer zur direkten Anwahl der Sprachbox für die vorgenannte Rufnummer lautet damit: 0171-13-1234 567. Eine Übersicht über die Sprachspeicher-Zusatzkennziffern bzw. Mailbox-Kennziffern der einzelnen Telefonnetzbetreiber in Deutschland sowie der Zusammensetzung der direkten Anwahlnummer der Mailbox des Teilnehmers ist in Fig. 5 dargestellt. In ausländischen Mobilfunknetzen erfolgt dies gewöhnlich in gleicher Art und Weise, so daß das beschriebene Verfahren weltweit eingesetzt werden kann.

Das "Zusammensetzen" der Rufnummer ist allerdings mühsam, da die vollständige Rufnummer per Hand beispielsweise in ein Mobiltelefon eingetippt werden muss. Es ist zwar möglich, die mühsam eingetippte "zusammengesetzte" Rufnummer der Sprachbox im Mobiltelefon abzuspeichern, allerdings kann dadurch schnell die Kapazität der Rufnummernspeichers des Telefons erschöpft sein, da dann zu vielen Teilnehmer zwei Rufnummern abgespeichert werden, nämlich die des Teilnehmeranschlusses und die der zugehörigen Sprachbox.

Von dem Unternehmen Kirusa (Internetseite: http://www.ki.rusa.com) wird eine separate Infrastruktur neben der des Mobilfunkproviders für sogenannte Voice-SMS angeboten. Diese Infrastruktur wird als Kirusa's Voice SMS solution - kurz KV.SMS^{tm}- bezeichnet. Voice-SMS sind eine Art gesprochene Kurznachrichten. Zum Senden einer Voice-SMS muss ein Benutzer in sein Mobiltelefon der Rufnummer des gewünschten Teilnehmers einen"*" voranstellen. Von der speziellen Voice-SMS-Infrastruktur im Mobilfunknetz des Providers wird die Rufnummer mit führendem"*" als Voice-SMS-Anruf erkannt. Daraufhin aktiviert die Voice-SMS-Infrastruktur die Sprachbox des gerufenen Teilnehmers zum Aufzeichnen einer Voice-SMS des Anrufers. Nach Abschluss der Aufzeichnung wird eine Benachrichtigungs-SMS an den gerufenen Teilnehmer gesendet. In der Benachrichtigungs-SMS ist ein spezieller Link enthalten, durch dessen Aktivierung der gerufene Teilnehmer unmittelbar die aufgezeichnete Voice-SMS anhören kann. Obwohl dieses System in der Handhabung sicherlich komfortabel ist, besitzt es den entscheidenden Nachteil, dass es technisch aufwendig und kostenintensiv ist, da eine spezielle Telekommunikations-Infrastruktur benötigt wird. Darüber hinaus verursacht diese Lösung für den Mobilfunkkunden zusätzliche Kosten.

Aufgabe der vorliegenden Erfindung ist es nun, Verfahren vorzuschlagen, die einen komfortablen automatischen Direktanruf eines elektronischen Sprachspeichers in einem Telekommunikationsnetz ermöglichen.

Diese Aufgabe wird durch ein Verfahren zum automatischen Direktanruf eines elektronischen Sprachspeichers in einem Telekommunikationsnetz mit den Merkmalen von Anspruch 1 und ein Verfahren zum Erstellen einer Direktwahl-Rufnummer für einen elektronischen Sprachspeicher in einem Telekommunikationsnetz mit den Merkmalen von Anspruch 8 gelöst. Weitere Ausgestaltungen der Erfindung ergeben sich aus den abhängigen Ansprüchen.

Ein wesentlicher Gedanke der Erfindung besteht darin, das aufwendige und mühsame manuelle Zusammensetzen der anzurufenden Telefonnummer des elektronischen Sprachspeichers eines Teilnehmers aus der Netz-Kennziffer, der Sprachspeicher-Zusatzkennziffer und der Teilnehmer-Rufnummer automatisch in einem Telefon vorzunehmen. Hierzu kann beispielsweise auf eine Zuordnungstabelle in einem Speicher des Telefons zurückgegriffen werden, in dem Zuordnungen von Netz-Kennziffern von Telekommunikationsnetzbetreibern zu Sprachspeicher-Zusatzkennziffern gespeichert sind. Dies hat den Vorteil, dass sich ein Anrufer keine spezifischen Direktwahlnummern zum direkten Erreichen des elektronischen Sprachspeichers eines Empfängers merken muss und die aufwendige Tipparbeit zum Eingeben einer zusammengesetzten Rufnummer des Sprachspeichers entfällt.

Die vorliegende Erfindung betrifft gemäß einer Ausführungsform ein Verfahren zum automatischen Direktanruf eines elektronischen Sprachspeichers in einem Telekommunikationsnetz unter Verwendung eines Nummernspeichers, in dem Zuordnungen von Netz-Kennziffern von Telekommunikationsnetzbetreibern zu Sprachspeicher-Zusatzkennziffern gespeichert sind, mit folgenden Schritten:
- Bereitstellen einer Telefonnummer, die eine Netz-Kennziffer und eine Teilnehmer-Rufnummer enthält;
- Erkennen der Netz-Kennziffer in der bereitgestellten Telefonnummer;
- Ermitteln einer Sprachspeicher-Zusatzkennziffer aus dem Nummernspeicher unter Verwendung der erkannten Netz-Kennziffer;
- Einfügen der ermittelten Sprachspeicher-Zusatzkennziffer zwischen die Netz-Kennziffer und die Teilnehmer-Rufnummer der bereitstellten Telefonnummer, um eine Sprachspeicher-Direktwahl-Rufnummer zu bilden; und
- Herstellen einer Verbindung zum der Sprachspeicher unter Verwendung der gebildeten Sprachspeicher-Direktwahl-Rufnummer.
Dieses Verfahren kann insbesondere als Software in einem Telefon implementiert sein, insbesondere in einem Mobiltelefon, vorzugsweise als zusätzliche Funktionalität. Beispielsweise kann ein Menüpunkt "Voice-SMS" in der Menüstruktur eines Mobiltelefons vorgesehen sein, der von einem Benutzer vor Auswahl oder Eingabe Telefonnummer eines zu rufenden Teilnehmers ausgewählt werden und einen automatischen Anruf des elektronischen Sprachspeichers des Teilnehmers bewerkstelligen kann. Der Menüpunkt kann auch in Form einer eigenen "Voice-SMS"-Taste des Telefons vorgesehen sein, die vor oder nach dem Eingeben einer Telefonnummer gedrückt werden kann, um das obige erfindungsgemäße Verfahren zu initiieren und eine komfortabler direkte Verbindung zum Sprachspeicher des Teilnehmers aufzubauen.

Beispielsweise kann der praktische Einsatz der Erfindung wie folgt aussehen:
1. Auswahl einer Zielrufnummer aus dem elektronischen Telefonbuch eines Mobiltelefons bzw. Eintippen der gewünschten Zielrufnummer
2. Drücken eines "hard key" oder "soft key" "VOICE SMS"
   Eine im Mobiltelefon implementierte Software, die das erfindungsgemäße Verfahren realisiert, setzt dann automatisch die Direktanwahlnummer der bzw. dem zur gewählten Telefonnummer gehörigen Sprachbox bzw. Sprachspeicher zusammen und wählt diese direkt und unmittelbar an. Bei diesem Ablauf müssen seitens eines Anwenders nicht mehr Bedienungsschritte durchlaufen werden als bei einem normalen Telefonat, d.h. das mühsame Eintippen und Zusammensetzen der Direktwahl-Rufnummer des Sprachspeichers kann entfallen.

Gemäß einer weiteren Ausführungsform der vorliegenden Erfindung kann das Verfahren ferner ein Aktualisieren des Nummernspeichers umfassen, um die Zuordnungen von Netz-Kennziffern von Telekommunikationsnetzbetreibern zu Sprachspeicher-Zusatzkennziffern zu erneuern. Dies ermöglicht, dass bei Änderungen der Sprachspeicher-Zusatzkennziffer eines Telefonnetzbetreibers oder einer Erweiterung des Nummernkreises auch eine Aktualisierung in dem Nummernspeicher des Telefons erfolgen kann. Diese Aktualisierung kann beispielsweise vollautomatisch ohne eingriff eines Benutzers eines Telefons insbesondere initiiert vom Telekommunikationsnetzbetreiber erfolgen.

In einer weiteren Ausführungsform kann das Verfahren ein Ausgeben einer Warnung umfassen, wenn einer Netz-Kennziffer keiner Sprachspeicher-Zusatzkennziffer in dem Nummernspeicher zugeordnet ist. Hierdurch wird ermöglicht, dass ein Bediener des Telefons darüber informiert wird, dass eine direkte Anwahl des elektronischen Sprachspeichers, beispielsweise aus Gründen eines Fehlens einer zugeordneten Sprachspeicher-Zusatzkennziffer für den Telefonnetzbetreiber in dem Speicher nicht möglich ist und möglicherweise eine Fehlfunktion zu erwarten ist. Beispielsweise kann die Warnung visuell auf dem Display eines Mobiltelefons angezeigt oder mittels eines besonderen Tons signalisiert werden.

Ferner kann das Verfahren gemäß einer weiteren Ausführungsform der Erfindung nach dem Herstellen der Verbindung zum Sprachspeicher ein Aufnehmen einer Sprachnachrichtendatei und ein Senden der Sprachnachrichtendatei zum Sprachspeicher und ferner ein Zuordnen einer Audiodatei, Grafikdatei oder Textdatei zu der Sprachnachrichtendatei umfassen. Dies bietet den Vorteil, dass ein Anrufer neben einer Sprachnachricht noch weitere Informationen an einen zentralen Server eines Telefonnetzbetreibers senden kann, um dem Empfänger der Sprachnachricht akustische, grafische oder textuelle Informationen übermitteln zu können. Hierdurch kann dem Empfänger der Sprachnachricht neben der akustischen Informationen der Sprachnachricht noch eine visuelle Information übermittelt werden, um zum Beispiel die Einprägsamkeit der Information der Sprachnachricht zu erhöhen oder der akustischen Sprachnachricht eine persönliche Note zu verleihen.

Ferner kann in einer weiteren Ausführungsform der vorliegenden Erfindung das Verfahren einen Schritt des Aufnehmens einer Sprachnachricht und einen Schritt des Konvertierens der aufgenommene Sprachnachricht in Text umfassen, um den Text insbesondere parallel bzw. zusätzlich elektronisch an ein Mobiltelefon zu senden, etwa als Text-SMS, das der bereitgestellten Telefonnummer zugeordnet ist. Dies ermöglicht vorteilhaft, dass, wenn lediglich die akustische Sprachnachricht vorliegt, eine Erhöhung der Einprägsamkeit der Information durch zusätzliche visuellen Informationen realisiert werden kann. Zugleich kann der Inhalt der Sprachnachricht bereits vorab dem Besitzer des Mobiltelefons bekannt gegeben werden.

Weiterhin kann in einer anderen Ausführungsform in dem Nummernspeicher eine Zuordnung von zwei Sprachspeicher-Zusatzkennziffern zu einer Netz-Kennziffer eines Telekommunikationsnetzbetreibers gespeichert sein und beim Schritt des Ermittelns eine erste der zwei Sprachspeicher-Zusatzkennziffern bestimmt wird, wenn beim Herstellen einer Verbindung zum Sprachspeicher eine Ansage desselben ausgegeben werden soll und eine zweite der zwei Sprachspeicher-Zusatzkennziffern bestimmt wird, wenn bei Erreichen des Sprachspeichers keine Ansage desselben ausgegeben werden soll. Ein derartiger Ansatz bietet den Vorteil, dass bei direkter Anwahl des elektronischen Sprachspeichers vom Telekommunikationsnetzbetreiber zugleich mehrere unterschiedlich schnelle Möglichkeiten der Anrufannahme und damit eine bessere Anpassung an Kundenwünsche realisiert werden können.

Auch kann in einer anderen Ausführungsform des Verfahrens beim Schritt des Erkennens eine Netz-Kennziffer einer Festnetz-Telefonnummer erkannt werden, der in dem Nummernspeicher keine Sprachspeicher-Zusatzkennziffer zugeordnet ist und ferner das Verfahren einen Schritt des Generierens einer anzurufenden Telefonnummer umfasst, bei der eine Netz-Kennziffer verwendet wird, die sich von der Netz-Kennziffer der Festnetz-Telefonnummer unterscheidet. Dies ermöglicht, dass eine aufzunehmende Sprachnachricht nicht an die Festnetzanschluss-Telefonnummer des gewünschten Gesprächspartners gesendet wird, sondern beispielsweise an einen elektronischen Sprachspeicher des Telefonnetzbetreibers. Somit wird vermieden, dass bei Abwesenheit des gewünschten Gesprächspartners die Sprachnachricht nicht zugestellt werden kann, wenn der gewünschte Gesprächspartner bei seinem Festnetzanschluss keinen Anrufbeantworter installiert hat.

Eine weitere Ausführungsform der Erfindung betrifft ein Verfahren zum Erstellen einer Direktwahl-Rufnummer für einen elektronischen Sprachspeicher in einem Telekommunikationsnetz unter Verwendung eines Nummernspeichers, in dem Zuordnungen von Netz-Kennziffern von Telekommunikationsnetzbetreibern zu Sprachspeicher-Zusatzkennziffern gespeichert sind, mit folgenden Schritten:
- Bereitstellen einer Telefonnummer, die eine Netz-Kennziffer und eine Teilnehmer-Rufnummer umfasst;
- Erkennen der Netz-Kennziffer in der bereitgestellten Telefonnummer;
- Ermitteln einer Sprachspeicher-Zusatzkennziffer aus dem Nummernspeicher unter Verwendung der erkannten Netz-Kennziffer;
- Einfügen der ermittelten Sprachspeicher-Zusatzkennziffer zwischen die Netz-Kennziffer und die Teilnehmer-Rufnummer der bereitstellten Telefonnummer, um eine Sprachspeicher-Direktwahl-Rufnummer zu bilden.
Die derart automatisch generierte Sprachspeicher-Direktwahl-Rufnummer kann direkt zum Aufbau einer Verbindung zum elektronischen Sprachspeicher genutzt oder auch in einem Rufnummern-Speicher eines Telefons, insbesondere Mobiltelefons abgelegt werden, beispielsweise als Alternative zu der Telefonnummer. Dadurch kann ein Benutzer beim Auswählen von Rufnummern aus dem Rufnummernspeicher seines Telefonbuchs bequem zwischen zwei Rufnummern eines Teilnehmers wählen, der eigentlichen Telefonnummer und der Sprachspeicher-Direktwahl-Rufnummer, ohne dass lästige Tipparbeit für die Eingabe der Sprachspeicher-Direktwahl-Rufnummer erforderlich ist.

Die Erfindung betrifft ferner gemäß einer weiteren Ausführungsform ein Telefon, insbesondere Mobiltelefon, das zum automatischen Direktanruf eines elektronischen Sprachspeichers in einem Telekommunikationsnetz nach einem Verfahren gemäß der Erfindung eingerichtet ist. Insbesondere kann das Telefon wie bereits weiter vorne erläutert einen speziellen Menüpunkt oder eine Taste aufweisen, mit welcher der automatische Anruf eines elektronischen Sprachspeichers in einem Telekommunikationsnetz gemäß der Erfindung initiiert werden kann.

Das Telefon kann gemäß einer Ausführungsform der Erfindung folgende Merkmale aufweisen:
- einen Nummernspeicher, in dem Zuordnungen von Netz-Kennziffern von Telekommunikationsnetzbetreibern zu Sprachspeicher-Zusatzkennziffern gespeichert werden können;
- eine Erkennungseinrichtung, die ausgebildet ist, um die Netz-Kennziffer in der empfangenen Telefonnummer zu erkennen;
- eine Ermittlungseinrichtung, die ausgebildet ist, um eine Sprachspeicher-Zusatzkennziffer aus dem Nummernspeicher unter Verwendung der erkannten Netz-Kennziffer zu ermitteln;
- eine Einfügeeinrichtung die ausgebildet ist, um die ermittelte Sprachspeicher-Zusatzkennziffer zwischen die Netz-Kennziffer und die Teilnehmer-Rufnummer der bereitstellten Telefonnummer einzufügen, um eine Sprachspeicher-Direktwahl-Rufnummer zu bilden; und
- einer Verbindungseinrichtung, die ausgebildet ist, um den Sprachspeicher in dem Telekommunikationsnetz unter Verwendung der gebildeten Sprachspeicher-Direktwahl-Rufnummer anzurufen.

Das Telefon kann ein Mobiltelefon, aber auch ein Festnetz-Telefon sein. Im letzteren Fall ist auch von einem Festnetzanschluss eine schnelle und komfortable Anwahl eines elektronischen Sprachspeichers eines Telekommunikationsnetz-Teilnehmers möglich.

Gemäß einer weiteren Ausführungsform der Erfindung kann die Verbindungseinrichtung ausgebildet sein, eine Sprachnachricht über eine Datenverbindung, insbesondere über eine UMTS-, EDGE- oder GPRS-Datenverbindung zu übertragen. Dadurch ist es möglich, eine Sprachverbindung, insbesondere gemäß dem Voice-over-Internet-Protokoll (VoIP) über eine Datenverbindung aufzubauen, was gegenüber einer herkömmlichen leitungsvermittelten Verbindung kostengünstiger sein kann, insbesondere für Mobilfunkbetreiber, da die Frequenzresourcen durch Datenübertragungen in der Regel weniger belastet werden.

In einer weiteren Ausführungsform der Erfindung kann in der Betriebssoftware des Telefons ein Menüpunkt vorgesehen sein, der über eine Anzeigeeinrichtung des Telefons angewählt und mit dem ein automatischer Direktanruf eines elektronischen Sprachspeichers initiiert werden kann. Alternativ oder auch zusätzlich kann das Telefon gemäß einer Ausführungsform der Erfindung auch eine gesonderte Taste, insbesondere eine entsprechend belegte Funktionstaste aufweisen, bei deren Betätigung ein automatischer Direktanruf eines elektronischen Sprachspeichers initiiert wird.

Das Telefon kann ferner gemäß einer Ausführungsform der Erfindung ausgebildet sein, eine Sprachnachricht zwischenzuspeichern und automatisch die zwischengespeicherte Sprachnachricht an jeden Sprachspeicher einer Gruppe von Telefonnummern dadurch zu übermitteln, dass es automatisch sequenziell jeden Sprachspeicher der Gruppe von Telefonnummern unter Verwendung der aus den Telefonnummern der Gruppe gebildeten Sprachspeicher-Direktwahl-Rufnummern anruft und die zwischengespeicherte Sprachnachricht für eine Aufzeichnung wiedergibt. Damit ist es möglich, einen Gruppenruf von beispielsweise einem Mobil- oder Festnetztelefon aus abzusetzen. Hierzu kann ein Benutzer eine Gruppe von Telefonnummern festlegen. Will der Benutzer nun einen Gruppenruf in Form eines Sprachnachricht an alle Telefonnummern der Gruppe initiieren, kann er den Gruppenruf durch Auswählen der Gruppe und beispielsweise Drücken der Taste "Voice-SMS" oder Aufrufen des entsprechenden Menüpunkts seines Telefons starten. Das Telefon zeichnet dann zunächst die Sprachnachricht vom Benutzer aus und speichert sie zwischen, bevor es automatisch der Reihe nach aus jeder Telefonnummer eine Direktwahl-Rufnummer für den entsprechenden elektronischen Sprachspeicher generiert und den Sprachspeicher direkt anruft und die zwischengespeicherte Sprachnachricht zum Aufzeichnen wiedergibt.

Insbesondere kann das Telefon gemäß einer weiteren Ausführungsform derart ausgebildet sein, dass es das Ende eines Ansagetextes eines Sprachspeichers erkennen kann und nach dem Erkennen des Endes des Ansagetextes mit der Wiedergabe der zwischengespeicherten Sprachnachricht beginnt.

Gemäß einer weiteren Ausführungsform der Erfindung ist ein Sprachserver vorgesehen, der zum Betrieb mit einem Verfahren nach der Erfindung ausgebildet ist und folgende Merkmale aufweist:
- einen Sprachspeicher, der ausgebildet ist, um eine Sprachnachricht zu speichern;
- eine Internet-Schnittstelle, die mit dem Sprachspeicher gekoppelt und ausgebildet ist, um eine Audiodatei zu empfangen und diese Audiodatei als Sprachnachricht in dem Sprachspeicher zu speichern und um zusätzlich zu der Audiodatei eine Telefonnummer für eine Telefonverbindung zu empfangen, an die die in dem Sprachspeicher gespeicherte Sprachnachricht über eine Telefonverbindung versendet werden soll; und
- eine Übertragungseinheit, die ausgebildet ist, um die Sprachnachricht an die mittels der Internet-Schnittstelle empfangenen Telefonnummer über die Telefonverbindung auszusenden.
Dies bietet den Vorteil, dass die Sprachnachricht sowie die anzurufende Telefonnummer nicht nur über ein Telefon an den zentralen Server des Telefonnetzbetreibers übertragen werden können, sondern auch eine Übertragung mittels Internet an den Server möglich ist. Dabei kann über den Sprachspeicher die Sprachnachricht zwischengespeichert werden, so dass ähnlich einer Email eine direkte Kommunikation mit dem gewünschten Empfänger der Sprachnachricht nicht erforderlich ist. Dies ermöglicht eine weitere Flexibilisierung der Kommunikation da durch den Zugriff über Internet eine einfache und universelle Schnittstelle geschaffen wird. Ferner bietet dies die Möglichkeit, neben der Telefonnummer auch noch die Audiodatei über das Internet an den zentralen Server des Telefonnetzbetreibers zu übermitteln und auf diese Art einen schnelle und effiziente unidirektionale Verbindung zu dem Empfänger der Sprachnachrichten aufzunehmen.

In einer weiteren Ausführungsform kann die Internet-Schnittstelle ausgebildet sein, um die Telefonnummer und die Audiodatei über eine E-mail zu empfangen. Dies bietet den Vorteil, dass keine direkte Eingabe der Sprachnachricht über beispielsweise ein Web-Portal erforderlich ist, sondern auch eine Sprachnachricht in Form einer beliebigen Audiodatei aufgenommen werden kann und vor einem beliebigen Ort weltweit via Email an den Sprachserver übertragen werden kann. In diesem Fall kann ebenfalls eine vorherige Aufzeichnung der Sprachnachricht erfolgen und die Übermittlung an den Sprachserver erst viel später durchgeführt werden, ohne dass Information verloren wird.

Gemäß einer weiteren Ausführungsform der vorliegenden Erfindung kann die Internet-Schnittstelle ausgebildet sein, um eine Textnachricht zu empfangen und eine Text-zu-Sprache-Konversion durchzuführen, um aus dem Text eine Sprachnachricht zu erzeugen und diese erzeugte Sprachnachricht in dem Sprachspeicher zu speichern. Dies bietet den Vorteil, dass auch eine zusätzliche Sprachnachricht an den Empfänger versandt werden kann, wenn weitere Informationen in textueller Form in einer Textpassage über das Internet an den zentralen Server des Telefonnetzbetreibers eingegeben wird.

Auch kann in einer weiteren Ausführungsform der vorliegenden Erfindung die Internet-Schnittstelle ausgebildet sein, um eine Mehrzahl von Telefonnummern zu empfangen, an die eine einzelne Sprachnachricht gesendet werden soll. Dies ermöglicht eine Gruppenruf-Funktion, so dass eine identische Sprachnachricht an mehrere Empfänger mit unterschiedlichen Telefonnummern gesandt werden kann.

Auch kann die Übertragungseinheit in einer weiteren Ausführungsform einen Sperrdatei-Speicher aufweisen, in dem eine Sperr-Telefonnummer abgelegt ist und die Übertragungseinheit ferner ausgebildet sein, um eine Sprachnachricht nicht an die Telefonnummer zu versenden, wenn die Sperr-Telefonnummer mit der Telefonnummer übereinstimmt. Dies bietet einem Empfänger die Möglichkeit, sich vor unerwünschten Nachrichten (beispielsweise Werbenachrichten) durch Eintrag seiner Telefonnummer in den Sperrdatei-Speicher zu schützen, so dass derartige Nachrichten nicht von dem zentralen Server des Telefonnetzbetreibers an den Empfänger weitergeleitet werden.

In einer weiteren Ausführungsform der vorliegenden Erfindung kann ein Sprachserver mit folgenden Merkmalen vorgesehen sein:
- einem elektronischen Sprachspeicher, der ausgebildet ist, um eine Sprachnachricht sowie eine der Sprachnachricht zugeordnete Festnetz-Telefonnummer zu speichern; und
- eine Übermittlungseinheit, die ausgebildet ist, um eine Verbindung zwischen dem Sprachserver und einem der Festnetz-Telefonnummer zugeordneten Telefon herzustellen und bei einer hergestellten Verbindung die Sprachnachricht an das Telefon zu übertragen, wobei die Übermittlungseinheit ferner ausgebildet ist, um bei einem fehlgeschlagenen Versuch eines Herstellens einer Verbindung mit dem der Festnetz-Telefonnummer zugeordneten Telefon einen weiteren Versuch eines Herstellens einer Verbindung mit demselben durchzuführen.
Dies bietet den Vorteil, dass auch eine Sprachnachricht an ein Festnetz-Telefon übertragen werden kann, wenn weder der Teilnehmer, an den die Sprachnachricht gesendet werden soll eine Mailbox eingerichtet hat noch eine direkte Verbindung zwischen dem Anrufer und dem Angerufenen zustande kommen soll. Somit kann durch die Verwendung des beschriebenen Sprachservers eine technologische Brücke zwischen den herkömmlichen drahtgebundenen Festnetz-Telefonnetzen ohne Mailbox-Funktion und den Mobilfunk-Telefonnetzen mit Mailbox-Funktion geschlagen werden.

Gemäß einer weiteren Ausführungsform der Erfindung kann ein Sprachserver zum Betrieb mit einem Verfahren nach der Erfindung ausgebildet sein und einen Sprachspeicher umfassen, der ausgebildet ist, um eine Sprachnachricht zu speichern, wobei der Sprachserver ferner derart ausgebildet sein kann, dass er beim Empfang einer Sprachnachricht eine Benachrichtigungs-Kurzmitteilung automatisch erstellt und an einen Teilnehmeranschluss übermittelt, für welchen die Sprachnachricht vorgesehen ist. Insbesondere kann die Benachrichtigungs-Kurzmitteilung eine Information umfassen, dass die Sprachnachricht über einen Direktanruf des elektronischen Sprachspeichers erhalten wurde, der dem Teilnehmeranschluss zugeordnet ist. Dadurch kann ein Empfänger der Nachricht sofort erkennen, dass die gespeicherte Sprachnachricht direkt an den Sprachspeicher gesendet wurde und nicht über einen Anruf an die normale Telefonnummer der Empfängers.

Schließlich kann gemäß einer Ausführungsform der Erfindung der Sprachserver ferner ausgebildet sein, einen Direktanruf eines elektronischen Sprachspeichers insbesondere anhand der Sprachspeicher-Zusatzkennziffer zu erkennen und eine entsprechende Tarifierung des Direktanrufs zu veranlassen. Dadurch ist es möglich, die Direktanrufe von Sprachspeichern anders als beispielsweise normale Sprachkommunikationsverbindungen zu tarifieren. Insbesondere wird es dadurch einen Telekommunikationsnetzbetreiber oder Provider von Telekommunikationsdiensten ermöglicht, verschiedene Gebührenmodelle festzulegen. Denkbar wäre beispielsweise, dass ein Betreiber oder Provider einen Direktanruf eines Sprachspeichers kostengünstiger oder teurer als eine normale Sprachkommunikationsverbindung oder mit einem Blocktarif, d.h. einem verbindungsunabhängigen Festpreis abrechnet.

In einer weiteren Ausführungsform kann die vorliegende Erfindung als Verfahren zum Betreiben eines Sprachservers mit folgenden Schritten ausgebildet sein:
- Empfangen einer Telefonnummer für eine Telefonverbindung und einer Audiodatei über eine Internet-Schnittstelle,
- Speichern der Audiodatei als Sprachnachricht in einem Sprachspeicher; und
- Übertragen der Sprachnachricht an die Telefonnummer über die Telefonverbindung.

In einer weiteren Ausführungsform kann die vorliegende Erfindung ein Computerprogramm mit Programmcode zur Durchführung der Schritte eines vorstehend definierten Verfahrens sein, wenn das Computerprogramm auf einem Computer abläuft.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
- Fig. 1: ein Ablaufdiagramm eines Ausführungsbeispiels Verfahrens zum automatischen Anrufen eines elektronischen Sprachspeichers in einem Telekommunikationsnetz nach der vorliegenden Erfindung;
- Fig. 2: ein Ablaufdiagramm eines weiteren Ausführungsbeispiels des erfindungsgemäßen Verfahrens;
- Fig. 3: ein Ablaufdiagramm eines weiteren Ausführungsbeispiels des erfindungsgemäßen Verfahrens;
- Fig. 4: ein Ablaufdiagramm eines weiteren Ausführungsbeispiels des erfindungsgemäßen Verfahrens; und
- Fig. 5: eine Übersicht über die Zusammensetzung von anzurufenden Telefonnummern bei verschiedenen Telefonnetzbetreibern.

Im Folgenden können gleiche und/oder funktional gleiche Elemente mit den gleichen Bezugszeichen versehen sein

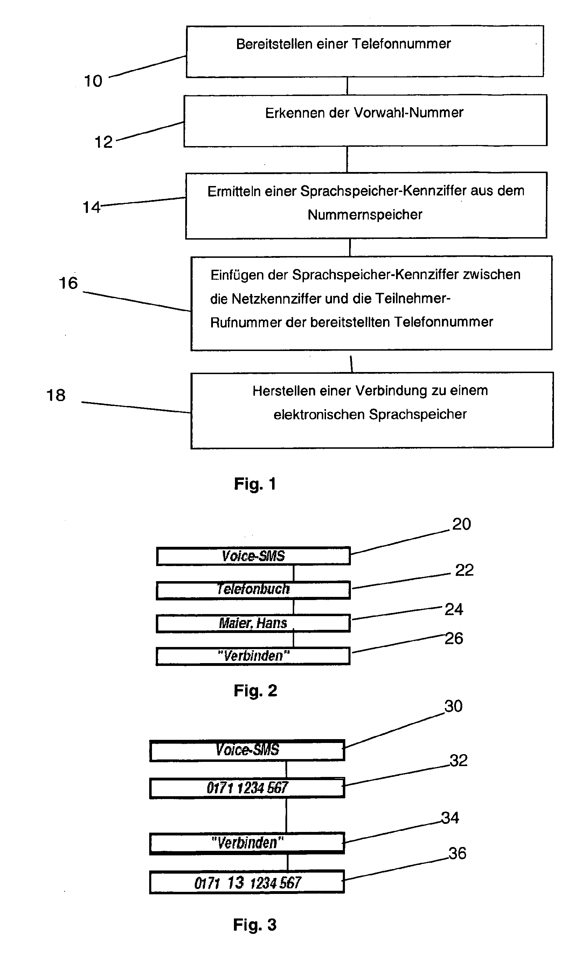

Fig. 1 zeigt ein Ablaufdiagramm eines Verfahrens zum automatischen Anrufen eines elektronischen Sprachspeichers in einem Telekommunikationsnetz. Zunächst wird in einem ersten Schritt 10 eine Telefonnummer bereitgestellt. Dieses Bereitstellen erfolgt automatisch durch Abrufen der Telefonnummer für einen Teilnehmer aus einem Telefon-Adressbuch-Speicher eines Telefons. Die abgerufene Telefonnummer setzt sich aus einer Netz-Kennziffer und einer (Teilnehmer-)Rufnummer zusammen. In einem zweiten Schritt 12 erfolgt ein Erkennen der Netz-Kennziffer der bereitgestellten Telefonnummer. Dies kann dadurch erfolgen, dass eine bestimmte Anzahl von Ziffern im vorderen Teil der bereitgestellten Telefonnummern mit Einträgen in einem Nummernspeicher abgeglichen wird, um festzustellen, ob eine Nummernfolge im vorderen Teil der bereitgestellten Telefonnummer mit einer gespeicherten Netz-Kennziffer im Nummernspeicher übereinstimmt. Wird eine solche bekannte Netz-Kennziffer in der bereitgestellten Telefonnummer erkannt, erfolgt in einem dritten Schritt 14 ein Ermitteln einer Sprachspeicher-Zusatzkennziffer aus dem Nummernspeicher. Verschiedene Möglichkeiten für solche Sprachspeicher-Zusatzkennziffern sind nachfolgend näher aufgeführt. In einem vierten Schritt 16 erfolgt ein Einfügen der ermittelten Sprachspeicher-Zusatzkennziffer zwischen die Netz-Kennziffer und die Teilnehmer-Rufnummer der bereitgestellten Telefonnummer. Hierdurch kann eine Sprachspeicher-Direktwahl-Rufnummer automatisch zusammengesetzt werden, mit der direkt die Mailbox des anzurufenden Teilnehmers erreicht werden kann. In einem fünften Schritt 18 erfolgt schließlich das Herstellen einer Verbindung zum elektronischen Sprachspeicher unter Verwendung der im vierten Schritt 16 zusammengesetzten Sprachspeicher-Direktwahl-Rufnummer, so dass eine Sprachnachricht direkt auf den elektronischen Sprachspeicher aufgezeichnet werden kann.

Als Vorteile des direkten Übertragens einer Sprachnachricht an die Mailbox des Empfängers lassen sich mehrere Aspekte nennen:
- der Anrufer gelangt - ohne Abwarten von mehreren Klingelzeichen - direkt und unmittelbar zur Sprachbox und kann dort sofort eine Nachricht aufsprechen. Dies ist somit ungleich schneller im Vergleich zur Anwahl der eigentlichen Teilnehmerrufnummer. Hier muss er mehrere Klingeltöne abwarten, bis dann erst zur Sprachbox geroutet wird.
- die direkte Anwahl der Sprachbox ist dann vorteilhaft, wenn der Anrufer momentan keinen Dialog mit dem Angerufenen führen mag (...aus Zeit- oder sonstigen Gründen...), sondern lediglich unidirektional eine Nachricht hinterlassen will. Diese Sprach-Kurznachricht hat also das gleiche Charakteristikum wie eine e-mail oder eine Text-SMS. Auch hier findet kein "Dialog" statt, sondern lediglich das unidirektionale Übermitteln und Hinterlassen einer Nachricht. Für viele Kommunikationsfälle ist dies vorteilhaft, da hier der Empfänger nicht sofort reagieren muss, sondern erst diese Nachrichten liest bzw. hier abhört, und dann fallweise antwortet oder in sonstiger Weise reagiert.

In herkömmlichen Systemen ist diese Möglichkeit vielen Mobilfunkkunden gar nicht bekannt und sie kennen die einzugebenden 2-stelligen Kurzziffern bzw. Sprachspeicher-Zusatzkennziffern der jeweiligen Netzbetreiber nicht. Selbst wenn die Kunden die Sprachspeicher-Zusatzkennziffern kennen, ist das "Komponieren" der Anwahlnummer der Sprachboxen des jeweiligen Empfängers relativ umständlich. Es muss nämlich der Anrufer die Nummer ggf. notieren, die 2-stellige Netzkennziffer einfügen und dann eine relativ lange und unhandliche Ziffernfolge eintippen. Diese Prozedur ist wenig bedienungsfreundlich. Mit dem erfindungsgemäßen Ansatz kann insbesondere die Handhabung im Vergleich zur klassischen "Text-SMS" erleichtert werden.

Anhand eines konkreten Beispiels wird nun erläutert, wie mit einem mobilen Endgerät ein automatischer Anruf eines elektronischen Sprachspeichers erfolgt. Hierzu ist eine entsprechende Software zur Implementierung der erfindungsgemäßen Funktionalität im mobilen Endgerät implementiert. Diese Software stellt folgenden Funktionsablauf sicher, der anhand der in den Fig. 2 und 3 wiedergegebenen Ablaufdiagrammen verdeutlicht wird:

Wünscht der Anrufer eine direkte Verbindung zur Sprach-Mailbox des Angerufenen, so wählt er im Menü seines mobilen Endgeräts den Menüpunkt "Voice SMS" aus (erster Schritt 20 in Fig. 2 bzw. erster Schritt 30 in Fig.3). Dann wählt er aus dem Telefonbuch seines mobilen Endgeräts die reguläre Empfänger- Rufnummer aus (zweiter Schritt 22 und dritter Schritt 24 in Fig. 2) oder tippt diese manuell ein (zweiter Schritt 32 in Fig. 3), sofern sie nicht abgespeichert ist.

Der Benutzer wählt diese Rufnummer an (vierter Schritt 26 in Fig. 2 bzw. dritter Schritt 34 in Fig. 3) und die Software im Endgerät ergänzt die Rufnummer aus dem "Telefonbuch" mit der erforderlichen 2-stelligen Zusatzziffer bzw. Sprachspeicher-Zusatzkennziffer (vierter Schritt 36 in Fig. 3). Die Software erkennt anhand der ersten drei Ziffern der Rufnummer, also der Netzkennziffer, den Netzbetreiber und ergänzt die Zielrufnummer um die 2-stellige Zusatzkennziffer für die direkte Anwahl der Mailbox (...also etwa bei "172" oder "174" die 2-stellige Ziffer "50" für Vodafone...). Die Netzkennziffern der jeweiligen in- und ausländischen Mobilfunkbetreiber sowie die zugehörigen 2-stelligen Mobilbox-Kennziffern sind in entsprechenden Zuordnungstabellen in einem Speicher des mobilen Endgeräts hinterlegt.

Unmittelbar danach stellt die Software des Endgeräts die Mobilfunkverbindung mit der Rufnummer der Sprachbox des Empfängers her. Nach Verbindungsaufbau kann der Anrufer sofort und direkt eine Nachricht auf der Sprachbox hinterlassen. So wird beispielsweise in Fig. 2 der Kunde sofort mit der Mobilbox des Angerufenen "Hans Maier" verbunden. Die Software erstellt dabei aus der Rufnummer des Teilnehmers "Hans Maier" die Rufnummer zur Direktanwahl seiner Mailbox und wählt diese an.

Nach wenigen Sekunden wird der Empfänger "Hans Maier" über eine SMS seines Mobilfunkbetreibers über den Eingang eines Anrufes auf der Mobilbox benachrichtigt. Die Benachrichtigung des Empfängers über eine hinterlegte Sprachnachricht erfolgt beispielsweise in gleicher Weise wie die Benachrichtigung eines regulären Anrufs auf der Sprachbox. Der Angerufene erhält innerhalb weniger Sekunden eine "Benachrichtigungs-SMS" seines Mobilfunkbetreibers etwa mit dem Text "....Sie haben eine neue Nachricht erhalten. Abruf unter 3311...." usw.

Ein alternativer Ablauf, bei dem der Anrufer noch weniger Tasten bedienen muss, nämlich genauso viele wie bei einem herkömmlichen Telefonanruf, umfasst die folgenden Schritte:
1. Erst wählt der Nutzer eine Ziel-Telefonnummer aus dem Telefonbuch des mobilen Endgeräts bzw. Festnetztelefons bzw. tippt diese ein.
2. Dann betätigt der die "Voice SMS" Taste (entweder als "hard key" oder "soft key" ausgeführt)
3. Dann wird die Direktwahlnummer für die Sprachbox automatisch zusammengestellt und führt unmittelbar darauf den Anwählvorgang bzw. Verbindungsaufbau durch.

Diese Abfolge erspart im Vergleich zur bisherigen Beschreibung für den Nutzer einen Bedienungsschritt ein.

Besonders günstig ist dabei, dass sich der Anrufer in den in Fig. 2 und 3 wiedergegebenen Ausführungsbeispielen keine spezifischen, 2-stelligen Netzkennziffern der jeweiligen Mobilfunkbetreiber merken muss. Darüber hinaus muss er nicht umständlich Mobilbox-Rufnummern zusammenstellen. Er selektiert einfach den Empfänger aus dem "Telefonbuch" oder "Adressbuch" seines mobilen Endgeräts bzw. tippt die eigentliche Empfängerrufnummer - unverändert - in sein mobiles Endgerät ein. Das Zusammenfügen der Rufnummer zum direkten Erreichen der Sprachbox erfolgt durch die Software. Weiterhin bestehe eine sehr schnelle, unmittelbare Möglichkeit, die Sprachbox zu erreichen und Nachrichten zu hinterlassen, insbesondere dann, wenn das mobile Endgerät des Empfängers angeschaltet ist und erst viele Klingeltöne sowie die Begrüßung abgewartet werden müssen. Auch bei längeren Nachrichten ist der vorgeschlagene Ansatz deutlich schneller und einfacher, als das manuelle Eintippen einer Text-SMS. Damit ist auch die Schaffung eines schnellen und effektiven Kommunikationsmittels möglich. Auch bietet der vorgeschlagene Ansatz eine sehr einfache Bedienbarkeit; deutlich einfacher und schneller als das Eintippen einer reinen Text-SMS-Nachricht, insbesondere bei kleinen Handy-Tastaturen.

Auch für den Mobilfunkbetreiber ermöglicht die Anwendung die Schaffung zusätzlicher Umsatz- und Ertragspotentiale, die sich aus der Anwahl und Vergebührung der Anrufe zu den jeweiligen Empfänger-Sprachboxen ergeben. Der Umsatz pro Anruf dürfte dabei höher liegen als der einer verschickten SMS-Nachricht. Insgesamt lassen sich die Vorteile des vorgeschlagenen Ansatzes für die Mobilfunkanbietern wie folgt zusammenfassen:
- Generierung zusätzlicher Erlöse durch Nutzung von voice-SMS-Nachrichten;
- Heranführung von Kundengruppen an den Versand von (...voice...) SMS-Nachrichten, die bislang SMS-Nachrichten nicht oder selten verschickt haben. Damit kann eine Erschließung eines weiteren Umsatzpotentials erfolgen;
- Pro generierter Text-Kurznachricht ist das Umsatzpotential von "Voice-SMS" Nachrichten deutlich höher wie jenes von reinen "Text-SMS";
- Das Anbieten vielfältiger Premium-Dienste ist denkbar, womit weiteres Umsatzpotential eröffnet werden kann; und
- Die Voice-SMS stellt keine unmittelbare Konkurrenz zu Text-SMS-Nachrichten dar, sondern ist ein komplementäres Produkt.

Im nachfolgenden werden weitere Ausführungsbeispiele der vorliegenden Erfindung näher erläutert, welche Weiterentwicklungen und Verbesserungen des bereits vorgestellten Ansatzes darstellen, ohne diesen zu beschränken.

### - "Online-update" der Mobilfunkendgeräte

Da von Zeit zu Zeit neue Netzkennziffern für die jeweiligen Mobilfunkbetreiber dazukommen, sollte es die Möglichkeit geben, die Software der mobilen Endgeräte und Festnetztelefone einem Update zuzuführen. D.h. werden etwa für T-Mobile neue Nummernkreise eröffnet, so sollten diese Rufnummern via SMS oder MMS oder sonstiger Datenübertragungsverfahren an die Endgeräte verschickt werden können, damit hier die richtige Zuordnung der 2-stelligen Ziffer zu der jeweiligen Empfängerrufnummer in einer "Zuordnungstabelle" fehlerfrei erfolgen kann. Für Festnetzgeräte, also Festnetztelefone, kann die Aktualisierung auch durch Anwahl einer bestimmten Service-Rufnummer erfolgen, über die dann die entsprechenden updates in das Festnetztelefon geladen werden können.

### - Meldung" Service für diese Rufnummer nicht verfügbar...."

Die Software sollte für Rufnummern, für die keine Anwahl zu Mailboxen möglich ist, eine Warnung an den Nutzer ausgeben wie beispielsweise die Meldung "Service für diese Rufnummer nicht verfügbar". Dies können z.B. Anrufe zu ausländischen, wenig angewählten Mobilfunknetzen sein, für die keine Zuordnungstabellen hinterlegt sind. Oder aber bei Anrufen zu deutschen Festnetznummern könnte eine solche Warnung auftreten, sofern der jeweilige Mobilfunkbetreiber keinen Dienst für Festnetznummern anbietet, oder auch bei Anrufen zu Mobilfunkkunden, die ihre Mobilbox gar nicht aktiviert haben.

### - Premium-Services

Neben dem Standard-Sprachdienst kann es für die Mobilfunkbetreiber interessant sein, "Premium-Dienste" anzubieten. Also etwa Jingles, Refrains von aktuellen Hits, kurze podcasts, Grußtexte und ähnliches per Menü bereitzustellen. Diese jingles usw. werden dann mit dem eigentlichen Sprachtext des Anrufers kombiniert und an den Empfänger in seine Sprachbox weitergeleitet. Für die Bereitstellung dieses Dienstes können zusätzliche Entgelte erhoben werden. Ein solches Ausführungsbeispiel ist in dem Ablaufdiagramm in Fig. 4 dargestellt. Hierbei wählt der Kunde im ersten Schritt 40 aus einem Menü seines Mobilfunkanbieters ein jingle zum Download aus (hier "Robbie Williams"), was Kosten von beispielsweise 1 EUR für den Kunden verursacht. Diese werden seiner Mobilfunkrechnung belastet. In einem zweiten Schritt 42 fügt der Kunde noch eine individuelle Sprachbotschaft, z.B. einen Gruß, hinzu. In einem dritten Schritt 44 wählt der Kunde aus dem Telefonbuch des Mobiltelefons den Empfänger aus, z.B. "Hans Maier" aus oder gibt eine Teilnehmerrufnummer direkt ein. In einem vierten Schritt 44 ermittelt eine Software aus der Teilnehmerrufnummer die Direktanwahlnummer der Mailbox. In einem fünften Schritt 46 kann nach Verbindungsaufbau ein Drücken der hierfür vorgesehenen Funktionstaste z.B. "#" erfolgen und es erfolgt das Übermitteln des Jingles und der persönlichen Grußbotschaft in die Empfänger-Mailbox. Der Empfänger erhält von seinem Mobilfunkbetreiber eine Benachrichtigungs-SMS über den Eingang.

### - Service für Festnetzkunden

Primär funktioniert die vorgeschlagene Lösung sehr gut für Mobilfunkteilnehmer, da diese im Regelfall und standardmäßig über eine eingerichtete Mobilbox verfügen. Zur Realisierung des Dienstes müssen seitens der Mobilfunkbetreiber keinerlei zusätzliche technischen Einrichtungen o.ä. geschaffen werden und er bereits heute sofort umgesetzt werden.

Anders gestaltet sich dies für Festnetzteilnehmer. Hier dürfte nur die Minderheit der heutigen Festnetzteilnehmer über ein SMS-fähiges Endgerät bzw. eine elektronische Sprachbox (z.B. T-Net Box) verfügen. Hier kann eine adäquate Lösung wie folgt aussehen:

Soll für einen Festnetzkunden eine Sprachnachricht hinterlassen werden und der Festnetzkunde verfügt über keine Sprachbox, so routet das Handy (...die Software erkennt anhand der gewählten Rufnummer, dass dies kein Mobilfunkkunde ist...) das Gespräch auf einen Sprachserver des Mobilfunkbetreibers. Hier wird der Anrufer aufgefordert, seinen Text aufzusprechen.

Anschließend wählt ein Sprachcomputer automatisiert die Empfängerrufnummer in bestimmten Sequenzen und in bestimmten Häufigkeiten an (...also etwa bis zu 5 oder 10 Versuche...) und spricht - automatisiert - nach Annehmen des Anrufes durch den Empfänger folgenden Text auf:

"....Sie haben folgende Sprachnachricht erhalten: ......(Abspielen der Sprachnachricht)..... Sie können diese Sprachnachricht jederzeit nochmals unter der Rufnummer 0180-1234 und nach Eingabe der Codenummer 12345 abrufen und anhören..."

D.h. auch für Festnetzkunden ist das Übermitteln und Hinterlassen von Sprachnachrichten relativ einfach möglich. Allerdings nicht mit der gleichen "Zustellwahrscheinlichkeit" wie bei Empfängern mit Mobilfunkrufnummern. Also etwa in jenen Fällen, in denen auch nach 5 oder mehr Anrufversuchen der Angerufene nicht das Telefon abnimmt o.ä.

### - "Text-to-speech" Konversion

Als zusätzliches Leistungsmerkmal wäre die "text-to-speech" Konversion denkbar, bei der ein Teil der Sprachnachricht automatisiert in Text umgewandelt wird und dem Empfänger der Nachricht zusätzlich als Text-SMS übermittelt wird. Es ergibt sich dadurch der Vorteil, dass der Empfänger der SMS-Nachricht sofort erkennen kann, um welche Art der Nachricht es sich handelt, noch bevor der die vollständige Nachricht über seine Mailbox abruft und abfragt.

### - Versand von Sprachkurznachrichten aus dem Festnetz

Sofern das genutzte Festnetz-Telefon die Funktionalitäten unterstützt, so ist die direkte Anwahl von Mailboxen der jeweiligen Mobilfunkkunden genau so problemlos möglich. Der Ablauf passiert dabei genau so wie oben beschrieben.

### - voice SMS "speed"

Diese Variante ermöglicht ein noch schnelleres Hinterlassen von Textnachrichten in der Sprachbox des Angerufenen.

Hier wird vom Mobilfunkbetreiber unter einer separaten, neuen Mobilbox-Rufnummer die Möglichkeit geschaffen, die Mobilbox zu erreichen, ohne dass ein Begrüßungstext abgespielt wird. D.h. nach Aufbau der Verbindung zur Mailbox kann der Anrufer sofort und unmittelbar eine Nachricht aufsprechen und hinterlassen.

Der Mobilfunkbetreiber sollte für diese Lösung eine weitere Kennziffer einrichten, also etwa im T-Mobile Netz die "14" zur Anwahl der Mobilbox des Empfängers ohne Ansagetext.

Lautet also die Rufnummer des Teilnehmers 0171 1234 567, so wäre die Rufnummer für die Direktanwahl der Mobilbox - wie bekannt - 0171 13 1234567.

Für die beschleunigte "speed" Variante etwa 0171 14 1234 567.

Die Auswahl, welche Variante angewählt werden soll, erfolgt über ein Auswahlmenü des Endgeräts (Mobiltelefon oder Festnetztelefon) des Anrufenden.

### - Versenden von Audio-Files an die Mobilbox über e-mail

Es ist möglich, die Mobilbox des Angerufenen über e-mail bzw. einen entsprechenden Anhang (Audio-Datei) zu adressieren. Hier könnten kurze podcasts, kurze Musikstücke, jingles, Klingeltöne und anderes mehr an die Mobilbox des Angerufenen übertragen werden. Diese Möglichkeit sollte vom Mobilfunkbetreiber entsprechend eingerichtet werden. Der Mobilfunkbetreiber sollte entsprechende e-mail Adressen vorsehen und vergeben, die eine eindeutige Adressierung der Mobilbox des adressierten Teilnehmers ermöglichen, etwa in der Form 0171 12345667@t-mobile.de.

Der Versand an die Mobilbox des Empfängers kann entweder kostenpflichtig oder kostenfrei erfolgen, entsprechend der Gebührenpolitik des Mobilfunkbetreibers.

Nach Eingang der zugestellten Nachricht erhält der Empfänger eine Benachrichtigung via SMS.

### - Versenden von Audio Files etc. über ein Web-Portal

Über ein Web-Portal des Mobilfunkbetreibers können komfortabel Texte, die dann via "text-to-speech" Verfahren konvertiert werden, an die Mobilbox des Empfängers geschickt werden. Der Absender tippt den Text in eine Eingabemaske ein, eine entsprechende Software übernimmt die Konvertierung in Sprache, die dann an die Mailbox des Empfängers weitergeleitet wird.

Daneben ist über dieses Web-Portal auch das Versenden von Anhängen, also etwa Audiofiles, kurze podcasts, Musikstücke, jingles u.a.m. an die Mobilbox des Empfängers möglich.

Im Regelfall wird der Mobilfunkbetreiber die Übermittlung von Text und Daten an die Empfänger-Mobilbox kostenpflichtig gestalten. Die Abgeltung des Preises für den Versand kann über bekannte Internet-Bezahlverfahren, Kreditkarte und andere mehr erfolgen.

### - Gruppenruf

Der Versand von Botschaften, Audio files etc. über Internet ermöglicht die Funktion des "Gruppenrufs". D.h. eine Vielzahl von Mailboxen von Mobilfunkteilnehmern können mit der gleichen Botschaft bzw. den gleichen Audio files parallel adressiert werden.

Dies kann ein sehr effizientes Mittel in der Firmenkommunikation sein, also das Versenden von Unternehmensnachrichten oder sonstigen, dringenden Botschaften parallel an eine Vielzahl von Mailboxen der Mitarbeiter, z.B. im Außendienst.

Auch kann ein derartiger Ansatz im Bereich der Direkt-Werbung ein interessantes Kommunikationsmedium sein. Dies ermöglicht den Mobilfunkbetreibern zusätzliche, interessante Geschäftsmöglichkeiten, da der Versand von Botschaften an ihre Kunden im Regelfall bezahlt werden muss.

### - Sperr-Möglichkeiten

Im Hinblick auf die umfangreichen Möglichkeiten der Adressierung der Mailboxen des Empfängers sollte es dem Empfänger möglich sein, differenzierte Sperren zu setzen. Also etwa in der Form, dass seine Mobilbox nur für Anrufe offen ist, jedoch nicht für den Versand von Audiofiles und Botschaften aus dem Internet, um etwaige, unerwünschte Werbung usw. zu unterbinden. Weiter soll eine Sperr-Möglichkeit nach Kundenwunsch vorgesehen werden können, die alle Anrufe aussperrt, bei denen keine Übertragung der Anrufer-Rufnummer erfolgt. Also jene Anrufe, bei denen das Leistungsmerkmal CLIP (Caller Line Identification Presentation) abgeschaltet ist. Dies soll - sofern der Kunde dies so wünscht und einstellen läßt - vermeiden, daß anonyme Anrufer Nachrichten auf der Sprachbox hinterlassen können.

Abhängig von den Gegebenheiten kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignal erfolgen, die so mit einem programmierbaren Computersystem zusammen wirken können, dass das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmmittel zur Durchführung des Verfahrens realisiert werden, wenn das Computer-Programm auf einem Computer abläuft.

### BEZUGSZEICHENLISTE

- 10: Schritt des Bereitstellens einer Telefonnummer
- 12: Schritt des Erkennens der Netz-Kennziffer
- 14: Schritt des Ermittelns einer Anrufbeantworter-Direktwahlnummer
- 16: Schritt des Einfügens der Anrufbeantworter-Direktwahlnummer zwischen die Netz-Kennziffer und die Teilnehmer-Rufnummer
- 18: Schritts des Herstellens einer Verbindung zu einem elektronischen Sprachspeicher
- 20: erster Schritt des in Fig. 2 dargestellten Ausführungsbeispiels
- 22: zweiter Schritt des in Fig. 2 dargestellten Ausführungsbeispiels
- 24: dritter Schritt des in Fig. 2 dargestellten Ausführungsbeispiels
- 26: vierter Schritt des in Fig. 2 dargestellten Ausführungsbeispiels
- 30: erster Schritt des in Fig. 3 dargestellten Ausführungsbeispiels
- 32: zweiter Schritt des in Fig. 3 dargestellten Ausführungsbeispiels
- 34: dritter Schritt des in Fig. 3 dargestellten Ausführungsbeispiels
- 36: vierter Schritt des in Fig. 3 dargestellten Ausführungsbeispiels
- 40: erster Schritt des in Fig. 4 dargestellten Ausführungsbeispiels
- 42: zweiter Schritt des in Fig. 4 dargestellten Ausführungsbeispiels
- 44: dritter Schritt des in Fig. 4 dargestellten Ausführungsbeispiels
- 46: vierter Schritt des in Fig. 4 dargestellten Ausführungsbeispiels
- 48: fünfter Schritt des in Fig. 4 dargestellten Ausführungsbeispiels

## Patentansprüche

1. Verfahren zum automatischen Direktanruf eines elektronischen Sprachspeichers in einem Telekommunikationsnetz unter Verwendung eines Nummernspeichers, in dem Zuordnungen von Netz-Kennziffern von Telekommunikationsnetzbetreibern zu Sprachspeicher-Zusatzkennziffern gespeichert sind, mit folgenden Schritten:
- Bereitstellen (10) einer Telefonnummer, die eine Netz-Kennziffer und eine Teilnehmer-Rufnummer umfasst;
- Erkennen (12) der Netz-Kennziffer in der bereitgestellten Telefonnummer;
- Ermitteln (14) einer Sprachspeicher-Zusatzkennziffer aus dem Nummernspeicher unter Verwendung der erkannten Netz-Kennziffer;
- Einfügen (16) der ermittelten Sprachspeicher-Zusatzkennziffer zwischen die Netz-Kennziffer und die Teilnehmer-Rufnummer der bereitstellten Telefonnummer, um eine Sprachspeicher-Direktwahl-Rufnummer zu bilden; und
- Herstellen (18) einer Verbindung zum Sprachspeicher unter Verwendung der gebildeten Sprachspeicher-Direktwahl-Rufnummer.

2. Verfahren gemäß Anspruch 1,
**dadurch gekennzeichnet, dass**
es ferner ein Aktualisieren des Nummernspeichers umfasst, um die Zuordnungen von Netz-Kennziffern von Telekommunikationsnetzbetreibern zu Sprachspeicher-Zusatzkennziffern zu erneuern.

3. Verfahren gemäß einem der Ansprüche 1 oder 2,
**dadurch gekennzeichnet, dass**
es ein Ausgeben einer Warnung umfasst, wenn einer Netz-Kennziffer keine Sprachspeicher-Zusatzkennziffer in dem Nummernspeicher zugeordnet ist.

4. Verfahren gemäß einem der Ansprüche 1 bis 3,
**dadurch gekennzeichnet, dass**
es nach dem Herstellen der Verbindung zum Sprachspeicher ein Aufnehmen einer Sprachnachrichtendatei und ein Senden der Sprachnachrichtendatei zum Sprachspeicher umfasst und es ferner ein Zuordnen einer Audiodatei, Grafikdatei oder Textdatei zur Sprachnachrichtendatei umfasst.

5. Verfahren gemäß einem der Ansprüche 1 bis 4,
**dadurch gekennzeichnet, dass**
es einen Schritt des Aufnehmens einer Sprachnachricht und einen Schritt des Konvertierens der aufgenommene Sprachnachricht in Text umfasst, um den Text insbesondere parallel bzw. zusätzlich elektronisch an ein Mobiltelefon zu senden, das der bereitgestellten Telefonnummer zugeordnet ist.

6. Verfahren gemäß einem der Ansprüche 1 bis 5,
**dadurch gekennzeichnet, dass**
in dem Nummernspeicher eine Zuordnung von zwei Sprachspeicher-Zusatzkennziffern zu einer Netz-Kennziffer eines Telekommunikationsnetzbetreibers gespeichert ist und beim Schritt des Ermittelns (14) eine erste der zwei Sprachspeicher-Zusatzkennziffern bestimmt wird, wenn beim Herstellen einer Verbindung zum Sprachspeicher eine Ansage desselben ausgegeben werden soll und eine zweite der zwei Sprachspeicher-Zusatzkennziffern bestimmt wird, wenn bei Erreichen des Sprachspeichers keine Ansage desselben ausgegeben werden soll.

7. Verfahren gemäß einem der Ansprüche 1 bis 6,
**dadurch gekennzeichnet, dass**
es beim Schritt des Erkennens (12) eine Netz-Kennziffer einer Festnetz-Telefonnummer erkennt, der in dem Nummernspeicher keine Sprachspeicher-Zusatzkennziffer zugeordnet ist, und dass es ferner einen Schritt des Generierens einer anzurufenden Telefonnummer umfasst, bei der eine Netz-Kennziffer verwendet wird, die sich von der Netz-Kennziffer der Festnetz-Telefonnummer unterscheidet.

8. Verfahren zum Erstellen einer Direktwahl-Rufnummer für einen elektronischen Sprachspeicher in einem Telekommunikationsnetz unter Verwendung eines Nummernspeichers, in dem Zuordnungen von Netz-Kennziffern von Telekommunikationsnetzbetreibern zu Sprachspeicher-Zusatzkennziffern gespeichert sind, mit folgenden Schritten:
- Bereitstellen (10) einer Telefonnummer, die eine Netz-Kennziffer und eine Teilnehmer-Rufnummer umfasst;
- Erkennen (12) der Netz-Kennziffer in der bereitgestellten Telefonnummer;
- Ermitteln (14) einer Sprachspeicher-Zusatzkennziffer aus dem Nummernspeicher unter Verwendung der erkannten Netz-Kennziffer;
- Einfügen (16) der ermittelten Sprachspeicher-Zusatzkennziffer zwischen die Netz-Kennziffer und die Teilnehmer-Rufnummer der bereitstellten Telefonnummer, um eine Sprachspeicher-Direktwahl-Rufnummer zu bilden.

9. Telefon, insbesondere Mobiltelefon, das zum automatischen Direktanruf eines elektronischen Sprachspeichers in einem Telekommunikationsnetz nach einem Verfahren der vorhergehenden Ansprüche eingerichtet ist.

10. Telefon nach Anspruch 9,
**dadurch gekennzeichnet, dass**
es ferner folgende Merkmale aufweist:
- einen Nummernspeicher, in dem Zuordnungen von Netz-Kennziffern von Telekommunikationsnetzbetreibern zu Sprachspeicher-Zusatzkennziffern gespeichert werden können;
- eine Erkennungseinrichtung, die ausgebildet ist, um die Netz-Kennziffer in der empfangenen Telefonnummer zu erkennen;
- eine Ermittlungseinrichtung, die ausgebildet ist, um eine Sprachspeicher-Zusatzkennziffer aus dem Nummernspeicher unter Verwendung der erkannten Netz-Kennziffer zu ermitteln;
- eine Einfügeeinrichtung die ausgebildet ist, um die ermittelte Sprachspeicher-Zusatzkennziffer zwischen die Netz-Kennziffer und die Teilnehmer-Rufnummer der bereitstellten Telefonnummer einzufügen, um eine Sprachspeicher-Direktwahl-Rufnummer zu bilden; und
- einer Verbindungseinrichtung, die ausgebildet ist, um den Sprachspeicher in dem Telekommunikationsnetz unter Verwendung der gebildeten Sprachspeicher-Direktwahl-Rufnummer anzurufen.

11. Telefon nach Anspruch 10,
**dadurch gekennzeichnet, dass**
die Verbindungseinrichtung ausgebildet ist, eine Sprachnachricht über eine Datenverbindung, insbesondere über eine UMTS-, EDGE- oder GPRS-Datenverbindung zu übertragen.

12. Telefon nach Anspruch 9, 10 oder 11,
**dadurch gekennzeichnet, dass**
in der Betriebssoftware des Telefons ein Menüpunkt vorgesehen ist, der über eine Anzeigeeinrichtung des Telefons angewählt und mit dem ein automatischer Direktanruf eines elektronischen Sprachspeichers initiiert werden kann.

13. Telefon nach Anspruch 9, 10, 11 oder 12,
**dadurch gekennzeichnet, dass**
es eine gesonderte Taste, insbesondere eine entsprechend belegte Funktionstaste aufweist, bei deren Betätigung ein automatischer Direktanruf eines elektronischen Sprachspeichers initiiert wird.

14. Telefon nach einem der Ansprüche 9 bis 13,
**dadurch gekennzeichnet, dass**
es ausgebildet ist, eine Sprachnachricht zwischenzuspeichern und automatisch die zwischengespeicherte Sprachnachricht an jeden Sprachspeicher einer Gruppe von Telefonnummern dadurch zu übermitteln, dass es automatisch sequenziell jeden Sprachspeicher der Gruppe von Telefonnummern unter Verwendung der aus den Telefonnummern der Gruppe gebildeten Sprachspeicher-Direktwahl-Rufnummern anruft und die zwischengespeicherte Sprachnachricht für eine Aufzeichnung wiedergibt.

15. Telefon nach Anspruch 14,
**dadurch gekennzeichnet, dass**
es ferner derart ausgebildet ist, dass es das Ende eines Ansagetextes eines Sprachspeichers erkennen kann und nach dem Erkennen des Endes des Ansagetextes mit der Wiedergabe der zwischengespeicherten Sprachnachricht beginnt.

16. Sprachserver, der zum Betrieb mit einem Verfahren nach einem der Ansprüche 1 bis 7 ausgebildet ist und folgende Merkmale aufweist:
- einen Sprachspeicher, der ausgebildet ist, um eine Sprachnachricht zu speichern;
- eine Internet-Schnittstelle, die mit dem Sprachspeicher gekoppelt und ausgebildet ist, um eine Audiodatei zu empfangen und diese Audiodatei als Sprachnachricht in dem Sprachspeicher zu speichern und um zusätzlich zu der Audiodatei eine Telefonnummer für eine Telefonverbindung zu empfangen, an welche die in dem Sprachspeicher gespeicherte Sprachnachricht über eine Telefonverbindung versendet werden soll; und
- eine Übertragungseinheit, die ausgebildet ist, um die Sprachnachricht an die mittels der Internet-Schnittstelle empfangenen Telefonnummer über die Telefonverbindung auszusenden.

17. Sprachserver gemäß Anspruch 16,
**dadurch gekennzeichnet, dass**
die Internet-Schnittstelle ausgebildet ist, um die Telefonnummer und die Audiodatei über eine E-mail zu empfangen.

18. Sprachserver gemäß einem der Ansprüche 16 oder 17,
**dadurch gekennzeichnet, dass**
die Internet-Schnittstelle ausgebildet ist, um eine Textnachricht zu empfangen und eine Text-zu-Sprache-Konversion durchzuführen, um aus dem Text eine Sprachnachricht zu erzeugen und diese erzeugte Sprachnachricht in dem Sprachspeicher zu speichern.

19. Sprachserver gemäß einem der Ansprüche 16 bis 18,
**dadurch gekennzeichnet, dass**
die Internet-Schnittstelle ausgebildet ist, um eine Mehrzahl von Telefonnummern zu empfangen, an die eine einzelne Sprachnachricht gesendet werden soll.

20. Sprachserver gemäß einem der Ansprüche 16 bis 19,
**dadurch gekennzeichnet, dass**
die Übertragungseinheit ferner einen Sperrdatei-Speicher aufweist, in dem eine Sperr-Telefonnummer abgelegt ist und dass die Übertragungseinheit ferner ausgebildet ist, um eine Sprachnachricht nicht an die Telefonnummer zu versenden, wenn die Sperr-Telefonnummer mit der Telefonnummer übereinstimmt.

21. Sprachserver, der zum Betrieb mit einem Verfahren nach einem der Ansprüche 1 bis 7 ausgebildet ist und folgende Merkmale aufweist:
- einen elektronischen Sprachspeicher, der ausgebildet ist, um eine Sprachnachricht sowie eine der Sprachnachricht zugeordnete Festnetz-Telefonnummer zu speichern; und
- eine Übermittlungseinheit, die ausgebildet ist, um eine Verbindung zwischen dem Sprachserver und einem der Festnetz-Telefonnummer zugeordneten Telefon herzustellen und bei einer hergestellten Verbindung die Sprachnachricht an das Telefon zu übertragen, wobei die Übermittlungseinheit ferner ausgebildet ist, um bei einem fehlgeschlagenen Versuch eines Herstellens einer Verbindung mit dem der Festnetz-Telefonnummer zugeordneten Telefon einen weiteren Versuch eines Herstellens einer Verbindung mit demselben durchzuführen.

22. Sprachserver, der zum Betrieb mit einem Verfahren nach einem der Ansprüche 1 bis 7 ausgebildet ist und einen Sprachspeicher umfasst, der ausgebildet ist, um eine Sprachnachricht zu speichern, wobei der Sprachserver ferner derart ausgebildet ist, dass er beim Empfang einer Sprachnachricht eine Benachrichtigungs-Kurzmitteilung automatisch erstellt und an einen Teilnehmeranschluss übermittelt, für welchen die Sprachnachricht vorgesehen ist.

23. Sprachserver nach Anspruch 22,
**dadurch gekennzeichnet, dass**
die Benachrichtigungs-Kurzmitteilung eine Information umfasst, dass die Sprachnachricht über einen Direktanruf des elektronischen Sprachspeichers erhalten wurde, der dem Teilnehmeranschluss zugeordnet ist.

24. Sprachserver nach einem der Ansprüche 16 bis 23,
**dadurch gekennzeichnet, dass**
er ferner ausgebildet ist, einen Direktanruf eines elektronischen Sprachspeichers insbesondere anhand der Sprachspeicher-Zusatzkennziffer zu erkennen und eine entsprechende Tarifierung des Direktanrufs zu veranlassen.

25. Verfahren zum Betreiben eines Sprachservers nach den Ansprüchen 16 bis 24 mit folgenden Schritten:
- Empfangen einer Telefonnummer für eine Telefonverbindung und einer Audiodatei über eine Internet-Schnittstelle;
- Speichern der Audiodatei als Sprachnachricht in einem Sprachspeicher; und
- Übertragen der Sprachnachricht an die Telefonnummer über die Telefonverbindung.

26. Computerprogramm mit Programmcode zur Durchführung der Schritte eines Verfahrens gemäß einem der Ansprüche 1 bis 7 oder 25, wenn das Computerprogramm auf einem Computer abläuft.
